# EUROPÄISCHE PATENTSCHRIFT

(11) **EP 1 715 749 B1**
(45) Veröffentlichungstag und Bekanntmachung des Hinweises auf die Patenterteilung: **19.10.2016**
(21) Anmeldenummer: 05707207.6
(22) Anmeldetag: 04.02.2005
(51) Int. Cl.: A22C 13/00

(54) **NAHRUNGSMITTELHÜLLE MIT ÜBERTRAGBARER, ESSBARER INNENBESCHICHTUNG**
FOODSTUFF CASING HAVING A TRANSFERABLE, EDIBLE INNER COATING
ENVELOPPE ALIMENTAIRE A REVETEMENT INTERIEUR TRANSFERABLE COMESTIBLE

(30) Priorität: 07.02.2004 DE 102004006134
(43) Veröffentlichungstag der Anmeldung: 02.11.2006
(73) Patentinhaber: Kalle GmbH, 65203 Wiesbaden (DE)
(72) Erfinder: FÖGLER, Jens, 65232 Taunusstein (DE); GORD, Herbert, 55218 Ingelheim (DE); LANG, Bernd, Adolf, 65193 Wiesbaden (DE); WOLF, Peter, 49179 Ostercappeln (DE)
(74) Vertreter: Plate, Jürgen
(86) Internationale Anmeldenummer: PCT/EP2005/001155
(87) Internationale Veröffentlichungsnummer: WO 2005/074691

(56) Entgegenhaltungen:
- EP-A- 0 408 164
- DE-A1- 10 217 132
- DE-A1- 19 500 470
- US-A- 3 695 904
- US-A- 6 143 344

## Beschreibung

Die vorliegende Erfindung betrifft eine Nahrungsmittelhülle, die auf der dem Nahrungsmittel zugewandten Seite eine übertragbare Schicht aufweist, sowie ein Verfahren zu deren Herstellung. Sie betrifft ferner ihre Verwendung als künstliche Wursthülle.

Zu den Mitteln, mit denen sich der optische bzw. geschmackliche Eindruck einer Wurst modifizieren läßt, gehört seit langem das Eintauchen in entsprechende Bäder und das Auftragen von Gewürzen, insbesondere von Pfeffer. Sie werden in der Regel manuell durchgeführt und sind dementsprechend aufwendig. Es hat daher nicht an Versuchen gefehlt, Hüllen zu entwickeln, die einen Farb-, Aroma- oder Geschmacksstoff auf ein darin befindliches Nahrungsmittel übertragen können. Das soll insbesondere beim Erhitzen, Brühen oder Kochen des Lebensmittels erfolgen.

So ist in der EP-A 0 986 957 ist eine Hülle für Wurst oder Geflügelfleisch offenbart mit einer Trägerfolie auf Basis von Polyolefin, Polyamid, Polyester, Polyvinylidenchlorid, Polyvinylchlorid oder Polystyrol, wobei die Hülle auf der Innenseite eine Beschichtung mit einem übertragbaren Geschmacksstoff, beispielsweise einem flüssigen Grillhähnchenaroma, aufweist. Der Geschmacksstoff ist dabei mit einem Bindemittel, wie Alginat, Methylcellulose, Carboxymethylcellulose, Hydroxypropyl-methyl-stärke, Chitosan, Globulin, Pectin, Carageenan, Casein, Sojaprotein oder Weizenprotein, vermischt. Das Bindemittel wird bevorzugt noch mit einem Vernetzer, wie Glyoxal, Glutardialdehyd, Melamin-Formaldehyd oder Trimethylol-melamin, vernetzt. Zwischen der Trägerfolie aus dem thermoplastischen Polymer und der Geschmacksstoff enthalten Schicht kann sich noch eine weitere, nicht wasserlösliche Schicht befinden. Sie kann Polysaccharid und/oder Protein enthalten. Diese weitere Schicht kann auch als Deckschicht auf der Schicht mit dem Geschmacksstoff angeordnet sein. Beim Erhitzen der Wurst wird allein der Geschmacksstoff auf das Nahrungsmittel übertragen, gegebenenfalls durch die Deckschicht hindurch. Für eine Übertragung von festen Geschmacksstoffen, beispielsweise von Pfeffer (gemahlen, stückig oder in Form von ganzen Pfefferkörnern), ist die in der EP-A beschriebene Hülle nicht einsetzbar.

In der EP-A 0 992 194 ist schließlich eine Nahrungsmittel-Barrierehülle offenbart für Lebensmittel, die in der Hülle gebrüht oder gekocht werden. Die Hülle umfaßt eine wasserdampfsperrende und gasdichte Folie und eine fest damit verbundene saugfähige Innenlage, die mit Farb- und/oder Aromastoffen getränkt ist. Für die Innenlage geeignete Materialien sind insbesondere Gewebe, Gewirke oder Vliese aus Baumwoll-, Cellulose- oder Viskosefasern. Die Innenlage kann auflaminiert oder aufgeklebt sein. Als Farb- bzw. Aromastoff ist Flüssigrauch bevorzugt. Auch mit dieser Hülle lassen sich feste Aroma- bzw. Geschmacksstoffe, wie Pfeffer, nicht auf ein in der Hülle befindliches Nahrungsmittel übertragen.

Mit der in der DE 195 00 470 A1 beschriebenen Wursthülle läßt sich auch Pfeffer übertragen. Die Hülle wird auf der Innenseite mit einer aus dem flüssigen Zustand erstarrende Haftschicht versehen, auf die Gewürzpartikel geschleudert werden, solange die Haftschicht noch klebfähig ist. Überschüssige Partikel werden wieder entfernt, beispielsweise durch einen kräftigen Luftstrom. Die Hülle selbst besteht allgemein aus einem Textilmaterial, insbesondere einem Baumwollgewebe. Das Verfahren kann so gesteuert werden, daß die Gewürzpartikel nicht gänzlich in die Haftschicht eingebunden werden. Beim Abziehen der Hülle von der gereiften Wurst bleiben sie dann großenteil an oder in der Wurstoberfläche haften. Das ist besonders in den Fällen wichtig, in denen die Haftschicht nicht zu einem verzehrbaren Teil der Wurst werden soll. Für die Haftschicht können jedoch auch Stoffe verwendet werden, die nach dem Abziehen de Wursthülle ganz oder teilweise auf der Wurst verbleiben. Die Haftschicht besteht dann beispielsweise aus einem Eiweißstoff oder aus Alginat. Diese Hülle hat den Nachteil, daß das Wurstbrät die Gewürzpartikel beim Füllen der Hülle sehr leicht zusammenschiebt. Nach dem Abziehen der Hülle ist ist dann eine ungleichmäßige Beschichtung mit Pfefferpartikeln zu beobachten. Mit der Hülle können nur feste Gewürzpartikel übertragen werden. Flüssige Geschmacks- und/oder Aromastoffen, wie Paprika-Extrakt oder Flüssigrauch, lassen sich nicht gleichzeitig übertragen. Ein weiterer Nachteil besteht darin, daß sich die Menge an Gewürzpartikeln pro Flächeneinheit nicht genau vorherbestimmen läßt.

In der DE 102 17 132 ist eine nahtlose schlauchförmige Nahrungsmittelhülle mit guten Barriereeigenschaften für Wasserdampf und Sauerstoff offenbart, die Farb-, Aroma- und/oder Geschmacksstoffe auf ein darin befindliches Lebensmittel übertragen kann. Sie besteht aus einer nahtlosen äußeren Hülle, die ein Austrocknen des Lebensmittels verhindert und gleichzeitig Luftsauerstoff fernhält, und einer inneren Hülle, die auf der dem Lebensmittel zugewandten Seite mit einem übertragbaren Farb-, Aroma- und/oder Geschmacksstoff modifiziert ist. Sofern es sich um feste Farb-, Aroma- und/oder Geschmacksstoffe handelt, sind sie vorzugsweise mit Hilfe von Bindemitteln an die innere Oberfläche gebunden. Die innere Hülle kann aus Kunststoffmaterial, aber auch aus Papier, Textil oder Vliesstoff hergestellt sein und eine Längsnaht aufweisen. Innere und äußere Hülle sind nicht miteinander verbunden, nach dem Füllen der Hülle liegen sie lediglich aneinander an. Die innere Hülle trägt nur wenig zur mechanischen Stabilität der Gesamtkonstruktion bei. Sie weist keine oder nur sehr geringe Barriereeigenschaften auf. Die Trägerschicht der Gesamtkonstruktion ist demgemäß die äußere Hülle aus Polymermaterial.

Gegenstand der nicht vorveröffentlichten DE 103 14 699 ist eine Textilhülle, die die Farb-, Aroma- und/oder Geschmacksstoffe direkt speichert und an ein darin befindliches Nahrungsmittel abgeben kann. Bei dieser Hülle läßt sich die zu übertragende Gewürzmenge nicht exakt steuern, da Anteile in der Hülle selbst verbleiben können.

Es bestand daher nach wie vor die Aufgabe, eine Nahrungsmittelhülle zu entwickeln, die flüssige und/oder feste Farb-, Aroma- und/oder Geschmackstoffe gleichmäßig auf ein in der Hülle befindliches Nahrungsmittel überträgt, so daß auf eine zusätzliche Oberflächenveredlung verzichtet werden kann. Die Hülle soll zudem einfach und kostengünstig herzustellen sein.

Gelöst wurde die Aufgabe mittels einer Nahrungsmittelhülle gemäß Anspruch 1 mit einer Innenbeschichtung aus eßbarem Material, die feste und/oder flüssige Aroma-, Farb- und/oder Geschmacksstoffe enthält und auf ein in der Hülle befindliches Nahrungsmittel übertragbar ist, sowie mittels eines Verfahrens zu ihrer Herstellung gemäß Anspruch 11.

Gegenstand der vorliegenden Erfindung ist demgemäß eine Nahrungsmittelhülle mit Längsnaht und einer textilen Trägerschicht, die auf der dem Nahrungsmittel zugewandten Seite eine Beschichtung aufweist, wobei die Beschichtung eßbar, jedoch im wesentlichen wasserunlöslich ist und eine geschlossene Oberfläche aufweist, feste und/oder flüssige Aroma-, Farb- und/oder Geschmacksstoffe enthält und auf ein in der Hülle befindliches Nahrungsmittel transferierbar ist.

Die Beschichtung weist mindestens ein eßbares Bindemittel auf, das an dem textilen Trägermaterial weniger stark haftet als an einem - in einem nachfolgenden Arbeitsgang in die Hülle einzubringenden - proteinhaltigen Nahrungsmittel, wie Wurstbrät. Auf diese Weise wird sichergestellt, daß die Beschichtung vollständig und beschädigungsfrei übertragen wird. Das Lösen der Beschichtung von dem textilen Trägermaterial und das Binden an das Nahrungsmittel erfolgt allgemein besonders schnell beim Erhitzen des Nahrungsmittels in der Hülle, beispielsweise beim Brühen oder Kochen der Wurst.

Als eßbares Bindemittel mit Hafteigenschaften sind insbesondere Proteine pflanzlichen oder tierischen Ursprungs (wie Casein, Zein, Weizenprotein, Sojaprotein, Albumin, Gelatine oder Kollagen, wobei Gelatine und Kollagen besonders bevorzugt sind), Polysaccharide (speziell Alginat, Carageenan, Glucomannan, Methylcellulose, Stärke oder Hydroxypropylstärke) sowie beliebige Kombinationen davon geeignet. Proteine haben dabei den besondereren Vorteil, daß sie sich besonders leicht und dabei relativ fest mit Wurstbrät verbinden und so einen reibungslosen Tranfer der Beschichtung auf das Nahrungsmittel bewirken. Die Innenbeschichtung umfaßt daher bevorzugt mindestens ein Protein. Die übertragbare Schicht ist nicht oder nur wenig wasserlöslich, d.h. sie bleibt auch nach Einwirkung von Feuchtigkeit im wesentlichen intakt. Erreichen läßt sich das beispielsweise mit Hilfe von Vernetzern, beispielsweise Dialdehyde (wie Glyoxal oder Glutardialdehyd) oder Citrat, durch Behandeln mit Rauch und/oder durch Erwärmen oder Erhitzen.

Der feste oder flüssige Aroma-, Farb- und/oder Geschmacksstoff ist bevorzugt Pfeffer (fein gemahlen, stückig oder in ganzen Körnern), Currygewürz, Paprikaaroma, Trockenrauch, Flüssigrauch, flüssiges Grillaroma, Blattgewürze (wie Oregano, Dill oder Basilikum), (gefrier-)getrocknete und zerkleinerte Gemüse (Spargelgranulat, Brokkoli oder Süßkartoffeln), geschrotete Nüsse (wie Pinienkerne), Körner (Sesam oder Kürbiskerne), Käsepartikel, luftgetrockneter Honig, Caramel, Zimt, Marinaden aller Art, Dextrose, gegebenenfalls auch Enzyme oder Mikroorganismen, die verdauungsfördernde Enzyme produzieren.

In einer bevorzugten Ausführungsform befindet sich zwischen der übertragbaren Schicht aus eßbarem Material und dem textilen Trägermaterial noch eine relativ dünne Schicht, die im Gegensatz zu der übertragbaren Schicht aus wasserlöslichem Material besteht. In dem fertig verpackten Lebensmittel, d.h. besonders in der fertigen Wurst, wird diese Schicht durch in dem Lebensmittel enthaltene Feuchtigkeit angelöst oder aufgelöst, so daß die übertragbare Schicht ihre Verankerung verliert. Für die dünne zusätzliche Schicht eignen sich grundsätzlich alle lebensmittelrechtlich unbedenklichen Verbindungen, insbesondere die im Zusammenhang mit der übertragbaren Schicht genannten Proteine und Polysaccharide, soweit diese ausreichend löslich sind. "Löslich" bedeutet in diesem Zusammenhang, daß sich die Schicht unter der Einwirkung von Feuchtigkeit, die von außen zugeführt wird (z.B. beim Brühen mit Wasserdampf) und/oder aus dem Lebensmittel selbst stammt, weitgehend auflöst und nicht mehr als eigenständige Schicht erkennbar ist.

Diese Ausführungsform ist besonders günstig im Fall von grobkörnigen oder stückigen Aroma-, Farb- und/oder Geschmackstoffen, wie ganzen Pfefferkörnern oder grob gemahlenem Pfeffer. Auf die Schicht aus zumindest partiell wasserlöslichen, eßbaren Bindemitteln mit Hafteigenschaften werden dann die Pfefferkörner, -stücke oder Ähnliches aufgebracht. Anschließend wird soviel von dem/den eßbaren Bindemittel/n mit Hafteigenschaften aufgebracht und vernetzt, daß eine Oberfläche entsteht, die so glatt ist, daß Pfefferkörner oder ähnliche Partikel beim Füllen der Hülle nicht zusammengeschoben oder aus der Gesamtschicht herausgerissen werden. Auf diese Weise läßt sich beispielsweise eine Wurst erhalten, die, nach dem Abziehen des textilen Trägermaterials, lückenlos und gleichmäßig von Pfefferkörnern überzogen ist. Die zuerst aufgebrachte Bindemittelschicht wird zweckmäßig so dünn gewählt, daß sie - nach dem Abziehen des Trägermaterials - den optischen Eindruck praktisch nicht stört.

Die erfindungsgemäße Hülle hat den besonderen Vorteil, daß feste und flüssige Aroma-, Farb- und/oder Geschmacksstoffe gleichzeitig übertragen werden können. Beispielsweise kann ein flüssiges Paprikaa roma mit Pfefferkörnern oder -stücken kombiniert werden. Dabei kann jeweils eine Mischung aus den Aroma-, Farb- und/oder Aromastoffen aufgebracht werden. Ebensogut können auch erst die Aroma-, Farb- und/oder Geschmackstoffe aufgebracht werden. Darauf wird dann eine durchgehende Schicht aus den nicht oder nur gering löslichen eßbaren Bindemitteln aufgebracht.

Das textile Trägermaterial ist bevorzugt ein Gewebe, Gewirke, verfestigtes Vlies, Spinnvlies oder Faserpapier. Hergestellt sind diese insbesondere aus Naturfasern, wie Baumwoll- oder Cellulosefasern (z.B. Leinen), Wolle oder Seide. Auch Kunstfasern lassen sich einsetzen, beispielsweise Fasern auf Basis von Polyamid, Polyester, Polyolefin (insbesondere Polypropylen), Regeneratcellulose (= Zellwolle), Polyvinylacetat, Polyacrylnitril, Polyvinylidenchlorid (PVDC) oder Polyvinylchlorid (PVC). Mischungen verschiedener Fasern, z.B. Mischungen von Baumwolle und Polyester, sind ebenfalls verwendbar. Die Dicke bzw. das Flächengewicht des textilen Trägermaterials ist abhängig von der späteren Verwendung. Allgemein beträgt es 3 bis 1.000 g/m², bevorzugt 10 bis 200 g/m², besonders bevorzugt 20 bis 130 g/m². Den jeweiligen Anforderungen entsprechend ist das textile Trägermaterial dehnbar oder nicht dehnbar. Letzteres ist zweckmäßig für kaliberkonstante Wursthüllen.

Zusätzlich zu der für den Mitverzehr geeigneten, übertragbaren Beschichtung auf der Innenseite kann das Trägermaterial eine nicht-eßbare und nicht übertragbare Beschichtung auf der Außenseite und/oder auf der Innenseite aufweisen. Durch passende Wahl von Art und Dicke der Beschichtung läßt sich die Wasserdampf-, Rauch- und/oder Sauerstoffdurchlässigkeit der Hülle auf einen gewünschten Wert einstellen. So kann die Beschichtung beispielsweise aus Polyacrylat, Polyvinylacetat, PVDC, Polyurethan oder ähnlichen thermoplastischen Polymeren oder Polymermischungen bestehen.

Es können auch mehrere Beschichtungen gleicher oder verschiedener Zusammensetzung auf der Außenseite und/oder Innenseite aufgebracht sein. Auch eine Beschichtung aus regenerierter Cellulose ist geeignet, insbesondere in Verbindung mit einem Faserpapierträgermaterial.

Die erfindungsgemäße Nahrungsmittelhülle ist bevorzugt schlauchförmig. Hergestellt wird sie zweckmäßig aus einem textilen Flachmaterial, das gegebenenfalls mit einer oder mehreren der oben beschriebenen, nicht übertragbaren Beschichtung(en) versehen ist. Auf die Seite, die später die Innenseite bildet, wird dann eine Mischung aufgebracht, die mindestens ein eßbares Bindemittel mit Hafteigenschaften und mindestens einen Aroma-, Farb- und/oder Geschmacksstoff enthält. Darüber hinaus enthält die Beschichtungsmischung zweckmäßig Wasser, gegebenenfalls auch einen eßbaren Weichmacher, wie Glycerin, und/oder einen Vernetzer, wie Citrat (insbesondere Na-Citrat oder Triethylcitrat). Das Aufbringen selbst erfolgt beispielsweise durch einen ein- oder mehrfachen Rakelantrag. Die geschlossene Oberfläche der übertragbaren Schicht ist bevorzugt so glatt, daß das Wurstbrät beim Füllen problemlos darübergleiten kann. Nach dem Trocknen wird das beschichtete Flachmaterial in Bahnen geschnitten, die Bahnen werden jeweils in eine Schlauchform gebracht und die Längsränder der Bahnen dauerhaft miteinander verbunden, beispielsweise durch Nähen, Kleben oder Versiegeln. Mit gleichem Erfolg lassen sich die Längskanten auch mit Hilfe von Siegelstreifen oder Klebestreifen, die beispielsweise einen Reaktionskleber umfassen, dauerhaft verbinden.

Verwendung findet die erfindungsgemäße Nahrungsmittelhülle vor allem als künstliche Wursthülle.

Die nachfolgenden Beispiele dienen zur Illustration der Erfindung. Prozente sind darin Gewichtsprozente, soweit nicht anders ange geben oder aus dem Zusammenhang ersichtlich.

### Beispiel 1

Ein flaches Trägermaterial aus 100 % Polyamid-Gewebe mit einem Flächengewicht von 17 g/m² wurde mit einer Mischung aus Gelatine und Currygewürz beschichtet. Nach dem Trocknen betrug das Gesamtgewicht von Trägermaterial und Beschichtung etwa 50 g/m², d.h. die Beschichtung h atte ein Gewicht von 33 g/m². Das beschichtet Gewebe wurde in Bahnen geschnitten und jede Bahn wurde zu einem Schlauch in der Weise vernäht, daß sich die beschichtete Seite auf der Innenseite befand.

Die Hülle wurde mit Wurstbrät gefüllt, die gefüllte Hülle gebrüht und dann abgekühlt. Anschließend wurde die Hülle abgezogen. Es zeigte sich, daß sich die Beschichtung mit dem Wurstbrät verbunden hatte und an dieses übergegangen war. Die Oberfläche der Wurst war dementsprechend durch das Currygewürz gelb gefärbt und hatte den Geruch und den Geschmack von Curry angenommen.

### Beispiel 2

Ein flaches Trägermaterial aus einem Gemisch von Baumwolle und Polyester mit einem Gewicht von 58 g/m² wurde auf der späteren Außenseite zunächst mit einer Acrylat-Dispersion, dann mit PVDC beschichtet. Auf die spätere Innenseite wurde dann eine Gelatineschicht aufgebracht, in die Paprikagewürz eingemischt war. Nach dem Trocknen wies die Hülle ein Gesamtgewicht von etwa 150 g/m² auf. Das beschichtete Flachmaterial wurde dann wie im Beispiel 1 beschrieben zu Bahnen geschnitten und die Bahnen zu schlauchförmigen Hüllen geformt, wobei die Längskanten der einzelnen Bahnen miteinander vernäht wurden.

Die schlauchförmigen Hüllen wurde mit Wurstbrät gefüllt und gebrüht. Nach dem Abkühlen der Wurst konnte die Hülle problemlos abgezogen werden, wobei die Gelatine-Beschichtung mit dem Paprikagewürz praktisch vollständig auf dem Wurstbrät verblieb. Die Oberfläche der Wurst hatte die rote Paprikafarbe und die entsprechende Farbe und den Geruch von Paprikagewürz angenommen. Durch die Außenbeschichtung zeigte die Wurst nach dem Brühen nur einen sehr geringen Gewichtsverlust.

### Beispiel 3

Ein flaches Trägermaterial aus 100 % Polyamid-Gewirke mit einem Flächengewicht von 21 g/m² wurde mit einem wasserlöslichen Kollagenmaterial beschichtet. Auf diese Schicht wurden Pfefferkörner aufgebracht, anschließend wurde das Trägermaterial mit einer wasserunlöslichen Schicht aus Kollagen beschichtet und getrocknet. Dabei betrug das Endgewicht 80 g/m². Das beschichtete Trägermaterial wurde zu einem Schlauch in der Weise vernäht, daß sich die beschichtete Seite auf der Innenseite befand. Die Hülle wurde mit Wurstbrät gefüllt, die gefüllte Hülle gekocht und danach abgekühlt. Anschließend wurde die Hülle abgezogen. Dabei zeigte sich, daß sich die Beschichtung mit dem Wurstbrät verbunden hatte und auf dieses übergegangen war. Die Oberfläche der Wurst war lückenlos und gleichmäßig mit Pfefferkörnern überzogen. Die zuerst aufgebrachte, wasserlösliche Schicht war auf der Wurst praktisch nicht erkennbar.

## Patentansprüche

1. Nahrungsmittelhülle mit Längsnaht und einer textilen Trägerschicht, die auf der dem Nahrungsmittel zugewandten Seite eine Beschichtung aufweist, wobei die Beschichtung eßbar, dabei jedoch im wesentlichen wasserunlöslich ist und eine geschlossene Oberfläche aufweist, feste und/oder flüssige Aroma-, Farb- und/oder Geschmacksstoffe enthält und auf ein in der Hülle befindliches Nahrungsmittel transferierbar ist.

2. Nahrungsmittelhülle gemäß Anspruch 1, **dadurch gekennzeichnet, daß** die Beschichtung mindestens ein eßbares Bindemittel umfaßt, das an dem textilen Trägermaterial weniger stark haftet als an einem proteinhaltigen Nahrungsmittel.

3. Nahrungsmittelhülle gemäß Anspruch 2, **dadurch gekennzeichnet, daß** das eßbare Bindemittel ein Protein pflanzlichen oder tierischen Ursprungs, bevorzugt Casein, Zein, Weizenprotein, Sojaprotein, Albumin, Gelatine oder Kollagen, ein Polysaccharide, bevorzugt Alginat, Carageenan, Methylcellulose, Stärke, Hydroxypropylstärke oder eine Kombination davon ist.

4. Nahrungsmittelhülle gemäß einem oder mehreren der Ansprüche 1 bis 3, **dadurch gekennzeichnet, daß** der feste oder flüssige Aroma-, Farb- und/oder Geschmacksstoff Pfeffer, Currygewürz, Paprikaaroma, Trockenrauch, Flüssigrauch, flüssiges Grillaroma, Blattgewürze, (gefrier-)getrocknetes und zerkleinertes Gemüse, geschrotete Nüsse, Körner, Käsepartikel, luftgetrockneter Honig, Caramel, Zimt, Marinaden aller Art, Dextrose, oder Enzyme oder Mikroorganismen, die verdauungsfördernde Enzyme produzieren, umfaßt.

5. Nahrungsmittelhülle gemäß einem oder mehreren der Ansprüche 1 bis 4, **dadurch gekennzeichnet, daß** zwischen der textilen Trägerschicht und der übertragbaren eßbaren Schicht eine Schicht aus einem im wesentlichen wasserlöslichen Material angeordnet ist.

6. Nahrungsmittelhülle gemäß einem oder mehreren der Ansprüche 1 bis 5, **dadurch gekennzeichnet, daß** das textile Trägermaterial ein Gewebe, Gewirke, verfestigtes Vlies, Spinnvlies oder Faserpapier ist.

7. Nahrungsmittelhülle gemäß Anspruch 6, **dadurch gekennzeichnet, daß** das textile Trägermaterial aus Naturfasern, bevorzugt Baumwoll- oder Cellulosefasern, Wolle oder Seide, aus Kunstfasern, bevorzugt aus Fasern auf Basis von Polyamid, Polyester, Polyolefin, Regeneratcellulose, Polyvinylacetat, Polyacrylnitril, Polyvinylidenchlorid oder Polyvinylchlorid, oder Mischungen davon besteht.

8. Nahrungsmittelhülle gemäß einem oder mehreren der Ansprüche 1 bis 7, **dadurch gekennzeichnet, daß** sie auf der Außen- und/oder Innenseite mindestens eine nicht eßbare, nicht übertragbare Beschichtung aufweist.

9. Nahrungsmittelhülle gemäß Anspruch 8, **dadurch gekennzeichnet, daß** die Beschichtung auf der Außen- und/oder Innenseite ihre Durchlässigkeit für Wasserdampf, Rauch oder Sauerstoff vermindert.

10. Nahrungsmittelhülle gemäß Anspruch 1, **dadurch gekennzeichnet, daß** die Längsnaht eine genähte, geklebte oder gesiegelte Naht ist oder daß sie mit einem Siegelstreifen oder Klebestreifen hergestellt ist.

11. Verfahren zur Herstellung einer Nahrungsmittelhülle gemäß einem oder mehreren der Ansprüche 1 bis 10 mit einer textilen Trägerschicht und einer eßbaren Beschichtung, die ein Farb-, Aroma- und/oder Geschmacksstoff enthält und auf ein in der Hülle befindliches Nahrungsmittel transferierbar ist, **dadurch gekennzeichnet, daß** es die folgenden Schritte in der angegebenen Reihenfolge umfaßt:
- Bereitstellen eines textilen Flachmaterials,
- Aufbringen einer Schicht aus einer Mischung, die mindestens ein eßbares Bindemittel mit Hafteigenschaften und mindestens einen Aroma-, Farb- und/oder Geschmacksstoff enthält, auf die Seite, die später dem Nahrungsmittel zugewandt ist,
- Trocknen der Schicht,
- gegebenenfalls Schneiden des beschichteten Flachmaterials zu Bahnen,
- Formen der einzelnen Bahnen in eine Schlauchform und
- dauerhaftes Verbinden der Längsränder, bevorzugt durch Nähen oder Kleben.

12. Verfahren gemäß Anspruch 11, **dadurch gekennzeichnet, daß** die Mischung, die mindestens ein eßbares Bindemittel mit Hafteigenschaften und mindestens einen Aroma-, Farb- und/oder Geschmacksstoff enthält, eine wäßrige Mischung ist, die bevorzugt noch mindestens einen Weichmacher enthält.

13. Verfahren gemäß Anspruch 11 oder 12, **dadurch gekennzeichnet, daß** vor dem Aufbringen der eßbaren Beschichtung mindestens eine Barriereschicht auf die spätere Außenseite aufgebracht wird

14. Verwendung der Nahrungsmittelhülle gemäß einem oder mehreren der Ansprüche 1 bis 10 als künstliche Wursthülle.

## Claims

1. A foodstuff casing having a longitudinal seam and a textile support layer which, on the side facing the foodstuff, has a coating, wherein the coating is edible, but is essentially water-insoluble and has a closed surface, contains solid and/or liquid aroma substances, dyes and/or flavorings and is transferable onto a foodstuff located in the casing.

2. The foodstuff casing as claimed in claim 1, wherein the coating comprises at least one edible binder which adheres to the textile support material less strongly than to a proteinaceous foodstuff.

3. The foodstuff casing as claimed in claim 2, wherein the edible binder is a protein of plant or animal origin, preferably casein, zein, wheat protein, soy protein, albumin, gelatin or collagen, a polysaccharide, preferably alginate, carageenan, methylcellulose, starch, hydroxypropylstarch or a combination thereof.

4. The foodstuff casing as claimed in one or more of claims 1 to 3, wherein the solid or liquid aroma substance, dye and/or flavoring comprises pepper, curry spice, paprika aroma, dried smoke, liquid smoke, liquid grill aroma, herbs, (freeze-)dried and comminuted vegetables, ground nuts, grains, cheese particles, air-dried honey, caramel, cinnamon, marinades of all types, dextrose, or enzymes or microorganisms which produce enzymes promoting digestion.

5. The foodstuff casing as claimed in one or more of claims 1 to 4, wherein between the textile support layer and the transferable edible layer a layer made of an essentially water-soluble material is arranged.

6. The foodstuff casing as claimed in one or more of claims 1 to 5, wherein the textile support material is a woven fabric, knitted fabric, consolidated nonwoven, spunbonded nonwoven or fiber paper.

7. The foodstuff casing as claimed in claim 6, wherein the textile support material comprises natural fibers, preferably cotton or cellulose fibers, wool or silk, artificial fibers, preferably fibers based on polyamide, polyester, polyolefin, regenerated cellulose, polyvinyl acetate, polyacrylonitrile, polyvinylidene chloride or polyvinyl chloride, or mixtures thereof.

8. The foodstuff casing as claimed in one or more of claims 1 to 7, wherein, on the outside and/or inside, it has at least one non-edible, non-transferable coating.

9. The foodstuff casing as claimed in claim 8, wherein the coating on the outside and/or inside decreases its permeability to water vapor, smoke or oxygen.

10. The foodstuff casing as claimed in claim 1, wherein the longitudinal seam is a sewed, glued or sealed seam, or it is produced using a sealing strip or adhesive strip.

11. A method for producing a foodstuff casing as claimed in one or more of claims 1 to 10, having a textile support layer and an edible coating, which contains a dye, aroma substance and/or flavoring and is transferable onto a foodstuff located in the casing, which comprises the method comprising the following steps in the given sequence:
- providing a flat textile material,
- applying to the side which later faces the foodstuff a coat made of a mixture which comprises at least one edible binder having adhesion properties and at least one aroma substance, dye and/or flavoring,
- drying the coat,
- if appropriate cutting the coated flat material into webs,
- forming the individual webs into a tubular shape and
- permanently bonding the longitudinal edges, preferably by sewing or gluing.

12. The method as claimed in claim 11, wherein the mixture which contains at least one edible binder having adhesion properties and at least one aroma substance, dye and/or flavoring is an aqueous mixture which preferably further contains at least one plasticizer.

13. The method as claimed in claim 11 or 12, wherein, before the edible coating is applied, at least one barrier layer is applied to the later outside.

14. The use of the foodstuff casing as claimed in one or more of claims 1 to 10 as artificial sausage casing.

## Revendications

1. Enveloppe de produit alimentaire avec une soudure longitudinale et avec une couche de support textile qui comporte un revêtement sur le côté tourné vers le produit alimentaire, lequel revêtement est comestible tout en étant globalement insoluble dans l'eau et comportant une surface fermée, lequel revêtement contient des substances, solides et/ou liquides, aromatiques et/ou colorantes et lequel revêtement peut être transféré sur un produit alimentaire se trouvant dans l'enveloppe.

2. Enveloppe de produit alimentaire selon la revendication 1, **caractérisée en ce que** le revêtement comporte au moins un agent liant comestible qui adhère moins fort au support textile qu'à un produit alimentaire contenant des protéines.

3. Enveloppe de produit alimentaire selon la revendication 2, **caractérisée en ce que** l'agent liant comestible est une protéine d'origine végétale ou animale, de préférence de la caséine, de la zéine, de la protéine de blé, de la protéine de soja, de l'albumine, de la gélatine ou du collagène, un polysaccharide, de préférence de l'alginate, de la carraghénane, de la méthylcellulose, de l'amidon, de l'amidon hydroxypropylé ou une combinaison de ceux-ci.

4. Enveloppe de produit alimentaire selon une ou plusieurs des revendications 1 à 3, **caractérisée en ce que** la substance, solide ou liquide, aromatique et/ou colorante comprend du poivre, du curry, de l'arôme de paprika, de l'arôme de fumée sec, de l'arôme de fumée liquide, de l'arôme de grillade liquide, des herbes aromatiques, des légumes broyés et séchés (surgelés), des noix effilées, des graines, des morceaux de fromages, du miel séché à l'air, du caramel, de la cannelle, des marinades de tout type, du dextrose, ou des enzymes ou des microorganismes qui produisent des enzymes favorisant la digestion.

5. Enveloppe de produit alimentaire selon une ou plusieurs des revendications 1 à 4, **caractérisée en ce qu'**une couche en un matériau globalement soluble dans l'eau est agencée entre la couche de support textile et la couche comestible transférable.

6. Enveloppe de produit alimentaire selon une ou plusieurs des revendications 1 à 5, **caractérisée en ce que** le support textile est un tissu, un tricot, un non-tissé consolidé, une nappe de fils non orientés ou du papier de fibres.

7. Enveloppe de produit alimentaire selon la revendication 6, **caractérisée en ce que** le support textile est constitué de fibres naturelles, de préférence de fibres de coton ou de cellulose, de laine ou de soie, de fibres synthétiques, de préférence de fibres à base de polyamide, de polyester, de polyoléfine, de cellulose régénérée, d'acétate polyvinylique, de polyacrylonitrile, de polychlorure de vinylidène ou de chlorure de polyvinyle, ou des mélanges de ceux-ci.

8. Enveloppe de produit alimentaire selon une ou plusieurs des revendications 1 à 7, **caractérisée en ce qu'**elle comporte sur le côté extérieur et/ou intérieur au moins un revêtement non comestible et non transférable.

9. Enveloppe de produit alimentaire selon la revendication 8, **caractérisée en ce que** le revêtement sur le côté extérieur et/ou intérieur réduit sa perméabilité à la vapeur d'eau, à la fumée ou à l'oxygène.

10. Enveloppe de produit alimentaire selon la revendication 1, **caractérisée en ce que** la soudure longitudinale est une soudure cousue, collée ou scellée ou **en ce qu'**elle est fabriquée avec un ruban de scellement ou un ruban adhésif.

11. Procédé de fabrication d'une enveloppe de produit alimentaire selon une ou plusieurs des revendications 1 à 10 avec une couche de support textile et avec un revêtement comestible qui contient des substances aromatiques et/ou colorantes et qui peut être transféré sur un produit alimentaire se trouvant dans l'enveloppe, **caractérisé en ce qu'**il comprend les étapes suivantes dans l'ordre indiqué :
- préparation d'un matériau plat textile,
- application d'une couche d'un mélange, qui contient au moins un agent liant comestible avec des propriétés d'adhérence et au moins une substance aromatique et/ou colorante sur le côté qui sera ensuite tourné vers le produit alimentaire,
- séchage de la couche,
- découpage éventuel du matériau plat textile en bandes,
- formation des bandes individuelles en tuyaux et
- liaison durable des bords longitudinaux, de préférence par couture ou collage.

12. Procédé selon la revendication 11, **caractérisé en ce que** le mélange, qui contient au moins un agent liant comestible avec des propriétés d'adhérence et au moins une substance aromatique et/ou colorante, est un mélange aqueux qui contient de préférence encore au moins un assouplissant.

13. Procédé selon la revendication 11 ou 12, **caractérisé en ce que**, avant l'application du revêtement comestible, on applique au moins une couche formant barrière sur le futur côté extérieur.

14. Utilisation de l'enveloppe de produit alimentaire selon une ou plusieurs des revendications 1 à 10 comme boyau synthétique de saucisse.
